# EUROPEAN PATENT APPLICATION

(11) **EP 0 838 138 A2**
(43) Date of publication of application: **29.04.1998**
(21) Application number: 97202671.0
(22) Date of filing: 01.09.1997
(51) Int. Cl.: A01B 45/04

(54) **Method and apparatus for laying and/or taking up of relatively large and thick grass sods**

(30) Priority: 30.08.1996 NL 1003922; 10.02.1997 NL 1005247
(71) Applicant: Harmelerwaard Patents B.V., 3481 LC Harmelen (NL)
(72) Inventor: Van Vuuren, Johannes, 3481 LC Harmelen (NL)
(74) Representative: Land, Addick Adrianus Gosling

(57) **Abstract**

Method for laying one or more relatively large and thick grass sods having soil adhering to at least some extent thereto, wherein the sod is supplied on a supporting member and subsequently laid while a holding member for holding in place the soil on the underside of the sods is pulled out from between the ground and the sod.

## Description

Particularly in sport stadiums in which other activities such as pop concerts also take place there is increasingly less time available nowadays to allow grass to grow. Sowing and subsequently allowing grass to grow from seed is found in many cases to cost too much time. It has further been found that when a grass cover is laid using grass sods, too little time is often taken to allow the grass sods to grow firmly together with the ground, whereby the grass sods are too easily detached from the ground during sporting events.

From the American patent 4.049.060 is known a sod cutting apparatus which is arranged on an excavator shovel and wherein during cutting out of the sod a sheet or cloth is rolled up beneath it, whereby rolling of the sod is facilitated. The material of the sheet is of degradable material which decomposes before the rolled-up sod is rolled out for laying thereof.

The present invention has for its object to provide a method and apparatus enabling relatively rapid laying of a grass cover, wherein the above stated problems do not occur.

The present invention provides a method for laying one or more relatively large and thick grass sods having soil adhering to at least some extent thereto, wherein the sods are supplied on a supporting member and subsequently laid while a holding member for holding in place the soil on the underside of the sods is pulled out from between the ground and the sod.

Although the sods can also be laid in the rolled-up state by pulling on the holding member, the sods are preferably cut out, transported and laid in flat state in order to damage the sod as little as possible, wherein however this certainly does not preclude the sods being laid in zigzag form with one or more folds therein as described in the international patent application WO 95/02317.

The present invention further provides a method for taking up and/or transporting a relatively large and thick grass sod, wherein during taking up canvas, netting or cloth is arranged under the sods for holding in place soil adhering to the underside of these sods.

The present invention likewise provides apparatuses for performing the methods.

The present invention also provides a method for taking up laid grass sods again, in addition to apparatuses for performing this method.

Further advantages, features and details of the present invention will be elucidated in the light of the following description with reference to the annexed drawings, in which:
fig. 1 shows a view in perspective of a preferred embodiment of a method for cutting out and taking up a relatively large and thick grass sod;
fig. 2 shows on smaller scale a view in perspective of the apparatus and method shown in fig. 1;
fig. 3 is a view in perspective of a method and apparatus for further taking up of the grass sod as shown in fig. 1 and 2;
fig. 4 is a view in perspective of the apparatus and method according to the present invention during stacking of the thick grass sods;
fig. 5 is a view in perspective of a first stage of a method and apparatus for laying grass sods stacked as according to fig. 1-4;
fig. 6 shows an apparatus and method for laying a grass sod as according to fig. 5 at a further stage; and
fig. 7 shows a detail of the apparatus of fig. 6.

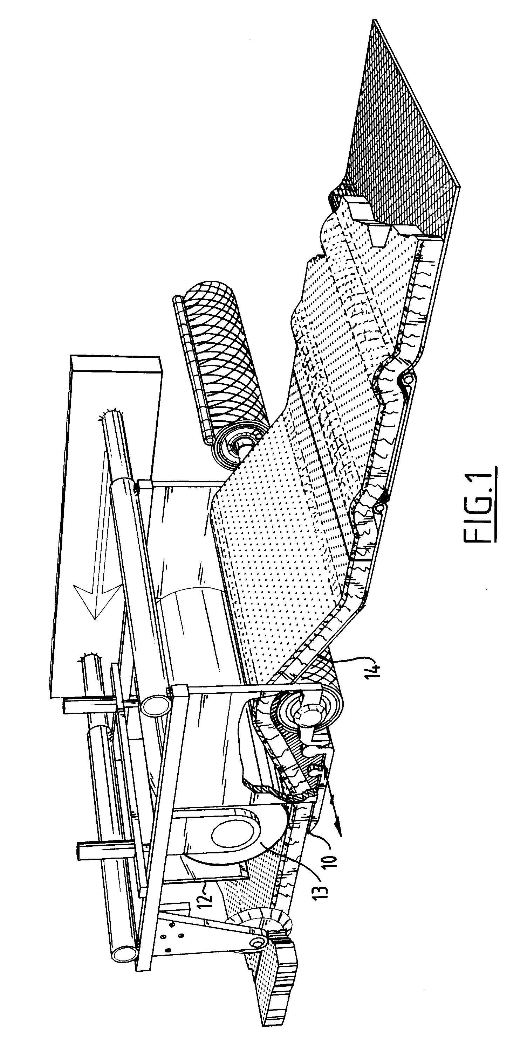

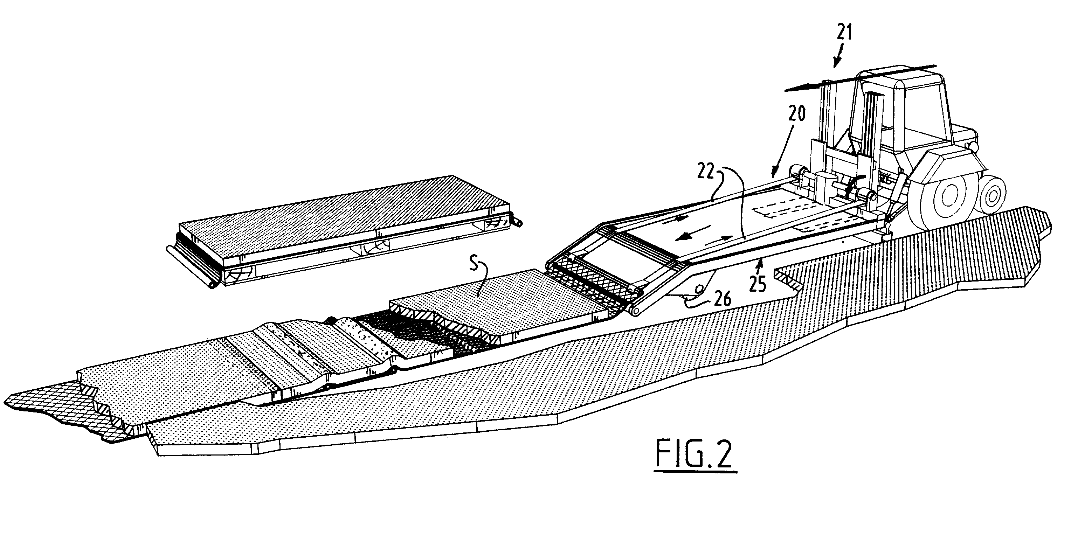

As depicted schematically in fig. 1, a grass sod S is cut out of a field of grass G using an undercutting knife 10 and a severing knife 12. During transport under a roller 13 a canvas or cloth 14 is unrolled beneath the relatively large grass sod, which is for instance 2.5 x 2.5 m² and relatively thick, for instance 7 cm thick, with soil thereon. The weight of such a grass sod can amount for instance to about 300 kg. This method is shown further in fig. 2, wherein canvas 14 is shifted further under the sod.

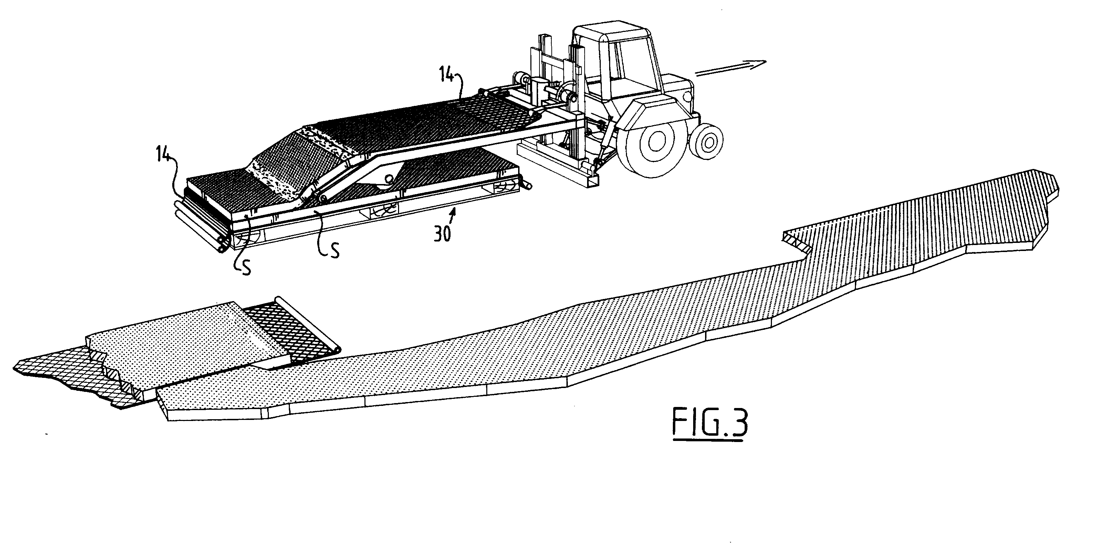

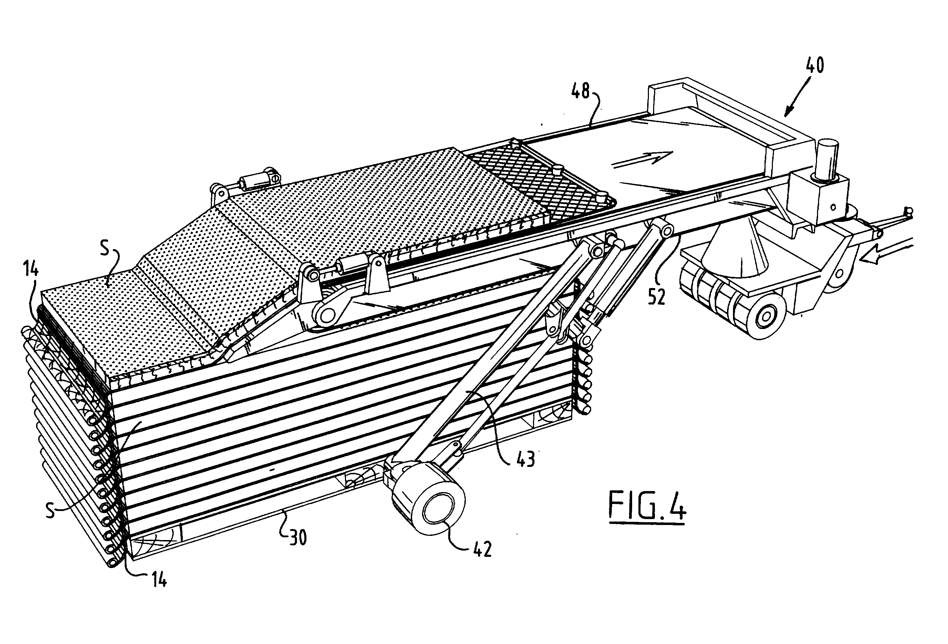

Using schematically designated belts 22 or other pulling members the grass sod S (fig. 3) is then pulled onto a pallet on a lifting mechanism 20 arranged on the rear of a tractor 21. Arranged behind the tractor as also shown in fig. 4 is the loading platform 25 which is provided on the rear part with wheels 26 onto which is pulled the canvas 14 with the sod S thereon.

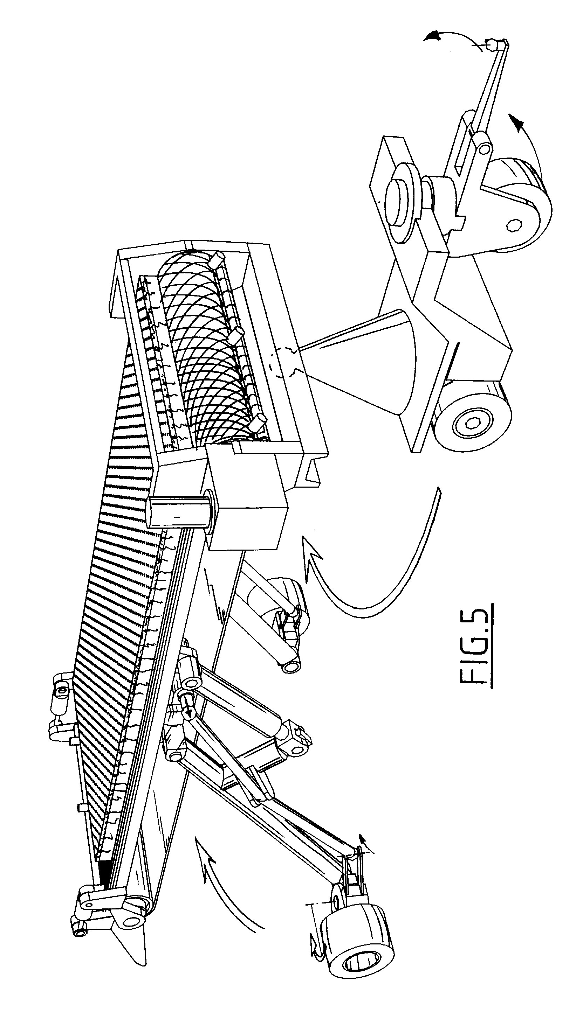

The sods are subsequently stacked on a pallet 30, as shown in fig. 5, on which are situated diverse sods S with canvasses 14 thereunder. Pallet 30 is transported with grass sods S thereon to a location where the sods have to be laid.

Although in the shown and described embodiment there is a separate canvas per sod, it will be apparent that in another embodiment use can be made of a zigzag canvas for two or more sods.

Sods can be removed from pallet 30 using a vehicle 40 which preferably takes a light form and has wide tyres so as not to load the ground on which sods S must be laid. The apparatus 40 is provided with a loading platform 41 which can be placed at a desired level using wheels 42 and pivotable arms 43 and onto which the sods are pulled using a cable 44 for arranging on an outer end of a canvas 14.

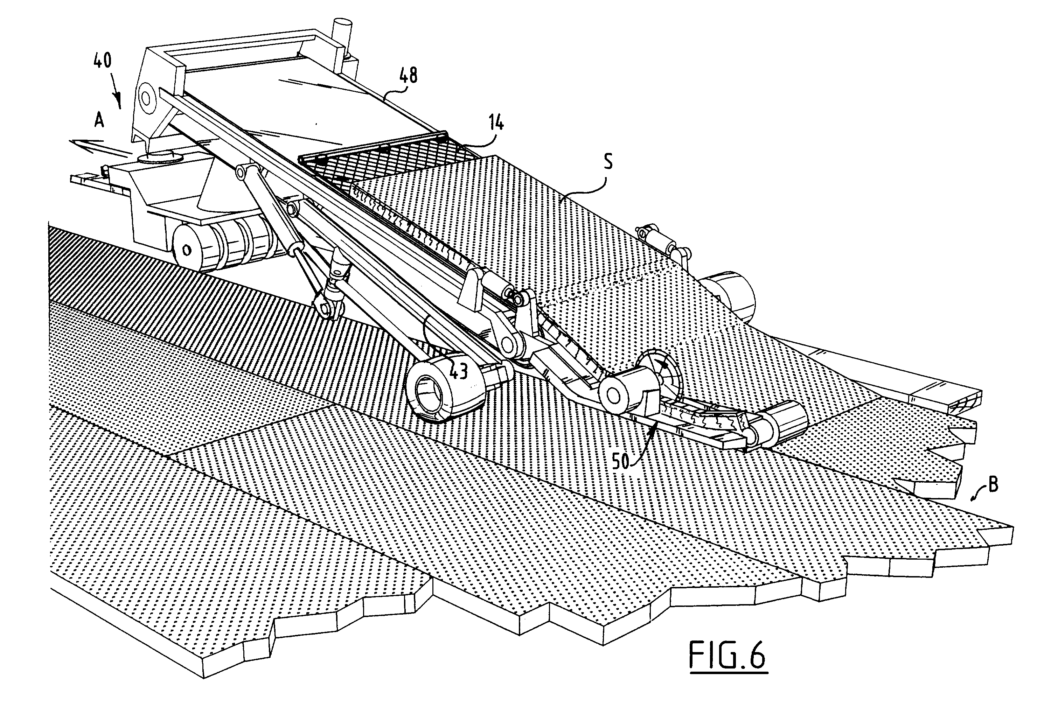

After the sod S has been pulled on board the apparatus 40 can be driven to the location where this sod S must be laid. By pivoting the arms 43 the loading platform can be placed in a forward inclined position wherein sod S can be laid on the ground B, while by means of a cable 44 to which the canvas was already attached during loading the canvas 14 can be pulled from under the sod. During laying the vehicle 41 is moved in the direction of arrow A while cable 14 is simultaneously pulled. By making the pulling speed of cable 14 slightly greater than the travel speed of vehicle 41 the sod S can firmly abut whereby it is laid firmly against the previously laid sod (fig. 6).

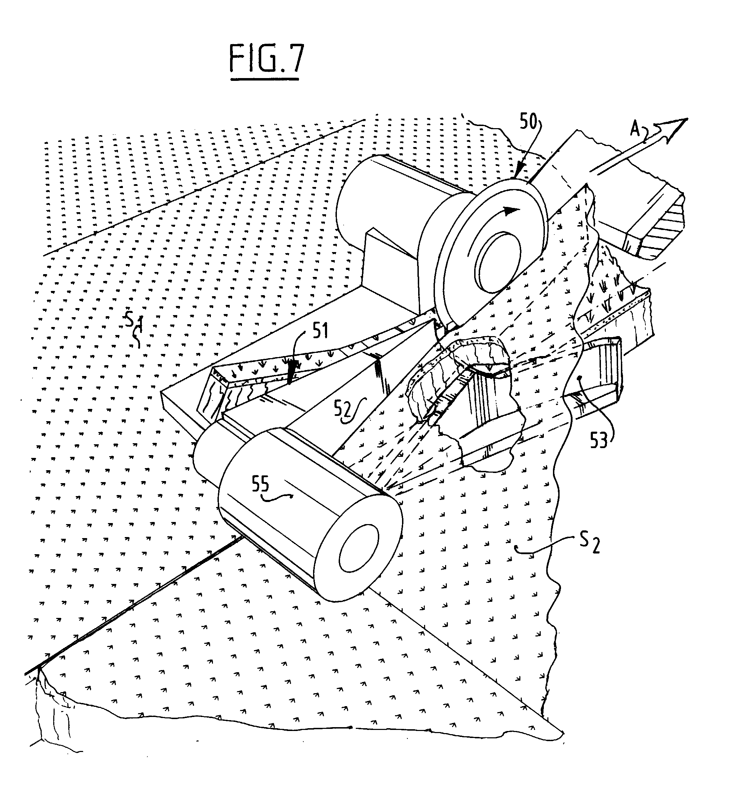

During laying a (frayed) edge is preferably cut off (fig. 7) using a cutting roller 50. The cut edge is discharged by means of a plate or chute 51. Both the already laid sod Sl and the sod for laying S2 are prefer; ably also pressed together slightly in sideward direction by means of guide plates 52 respectively 53. Once the sod for laying S2 has been pressed by a pressing roller, the guide plates 52 and 53 are pulled out from between sods S1 and S2 during travel of vehicle 40 and the edges thereof are pressed firmly against each other.

Since using the apparatus and method according to the present invention thick grass sods can be laid firmly against each other in large pieces without loss of soil, a flat grass cover is created which can be played on immediately. Due to the thickness the grass cover does not first have to attach itself to the ground.

The present invention is not limited by the above described preferred embodiments; the rights applied for are defined by the following claims, within the scope of which many modifications can be envisaged.

## Claims

1. Method for laying one or more relatively large and thick grass sods having soil adhering to at least some extent thereto, wherein the sod is supplied on a supporting member and subsequently laid while a holding member for holding in place the soil on the underside of the sods is pulled out from between the ground and the sod.

2. Method for taking up and/or transporting one or more relatively large and thick grass sods wherein during taking up canvas, netting or cloth is arranged under these sods for holding in place soil adhering to the underside of the sods.

3. Apparatus for performing the method as claimed in claim 1.

4. Apparatus for performing the method as claimed in claim 2.

5. Method as claimed in claim 1, wherein the sods for laying are obtained according to a method as claimed in claim 2.

6. Method as claimed in claim 1 or 5, wherein an edge of a sod for laying is cut off during laying thereof.

7. Method as claimed in claim 1, 5 or 6, wherein the sod for laying is pressed firmly against an already laid sod.

8. Apparatus for performing the method as claimed in either of the claims 5 or 6.

9. Apparatus for taking up, transporting and/or laying one or more relatively large and thick grass sods, wherein the apparatus comprises:
- a supporting member for supporting a sod in the flat state; and
- a holding member for temporarily holding together the grass sod in the flat state.

10. Apparatus as claimed in claim 9, wherein the supporting member is a pallet.

11. Apparatus as claimed in claim 9 or 10, wherein the holding member is a canvas or cloth.

12. Apparatus as claimed in claim 3, 4, 8, 9, 10 or 11, provided with relatively wide wheels.

13. Apparatus as claimed in any of the claims 3, 4, 8, 9, 10, 11 or 12, provided with inclining means for inclining of a pallet.

14. Apparatus as claimed in claim 3, 4 and/or 8-13, provided with cutting means for cutting of a sod for laying at the sides during laying.

15. Method as claimed in claim 1, 2 and/or 5, 6, 7, wherein the grass sod is laid, taken up and/or transported in substantially flat state.

16. Method as claimed in claim 1, 2 and/or 5, 6 or 7, wherein the grass sod is folded double in zigzag form one or more times.

17. Method as claimed in claim 2, wherein the canvas is pulled during and/or after transport.
